(19) Europäisches Patentamt / European Patent Office / Office européen des brevets

(11) **EP 3 144 916 A2**

(12) **EUROPEAN PATENT APPLICATION**

(43) Date of publication:
22.03.2017 Bulletin 2017/12

(51) Int Cl.:
*G08G 1/00* (2006.01)   *B60W 30/165* (2012.01)

(21) Application number: 16185683.6

(22) Date of filing: 25.08.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 15.09.2015 JP 2015182355

(71) Applicant: **Toyota Jidosha Kabushiki Kaisha Toyota-shi, Aichi 471-8571 (JP)**

(72) Inventor: **NEMOTO, Yusuke Toyota-shi,, Aichi 471-8571 (JP)**

(74) Representative: **TBK Bavariaring 4-6 80336 München (DE)**

(54) **CONTROL APPARATUS OF VEHICLE AND FOLLOWING TRAVEL SYSTEM**

(57) The invention relates to a control apparatus of a vehicle for causing an own vehicle to travel following a preceding vehicle. The control apparatus forbids the following travel of the own vehicle targeting the preceding vehicle when preceding vehicle information received through a wireless communication includes a following travel stop request for requesting the stop of the following travel of the own vehicle targeting the communicating preceding vehicle.

FIG. 1

**Description**

**BACKGROUND OF THE INVENTION**

**Technical Field**

The present invention relates to a control apparatus/method of a vehicle which causes an own vehicle to travel following a preceding vehicle using information on the preceding vehicle received through a wireless communication, a control apparatus/method of a vehicle comprising a wireless communication device which sends information on the own vehicle to other vehicles through the wireless communication, and a following travel system including vehicles comprising the control apparatus of the vehicle, respectively.

**Description of the related art**

A control apparatus of a vehicle for controlling an acceleration of an own vehicle to cause the own vehicle to travel following a preceding vehicle on the basis of information on the preceding vehicle received through a wireless communication, is described in JP 2015-51716 A.
Hereinafter, this control apparatus will be referred to as "the conventional control apparatus".

**SUMMARY OF THE INVENTION**

The conventional control apparatus has not been configured to stop a following travel of a vehicle traveling behind the own vehicle targeting the own vehicle when a driver of the own vehicle does not want the vehicle traveling behind the own vehicle to travel following the own vehicle.
The present invention has been made for solving this problem. Therefore, it is the object of the present invention to provide a control apparatus of a vehicle, a control method of a vehicle, and a following travel system, which can stop the following travel of a vehicle traveling behind the own vehicle targeting the own vehicle when the driver of the own vehicle wants to stop the following travel of the vehicle traveling behind the own vehicle, which can stop the following travel of a vehicle traveling behind the own vehicle (hereinafter, the vehicle traveling behind the own vehicle will be also referred to as "the following vehicle") targeting the own vehicle when the driver of the own vehicle does not want the following vehicle to travel following the own vehicle, and/or which can cause the following vehicle to stop the following travel of the following vehicle targeting the own vehicle when the drivers of the vehicles do not want the following vehicle to travel following the own vehicle.
The object of the present invention is achieved by the subject-matter defined in the independent claims.
Further advantageous developments are defined in the dependent claims.
A first aspect of the present invention relates to a control apparatus of a vehicle, which apparatus comprises:

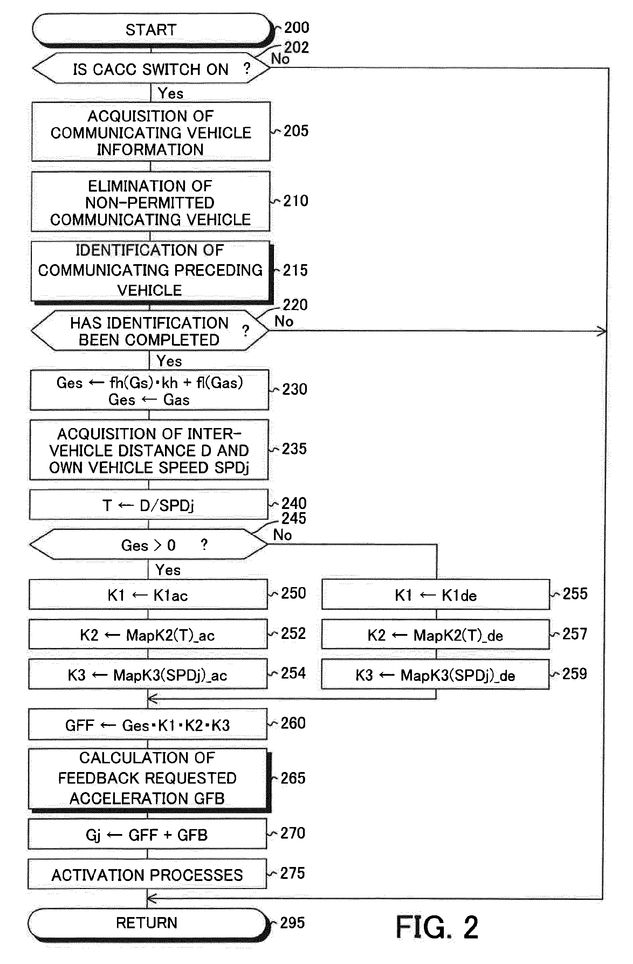

a wireless communication device (80, 81) that is configured to acquire communicating preceding vehicle information including acceleration information on an acceleration (Gs, Gas) of a communicating preceding vehicle (11) traveling in front of an own vehicle (10) from the communicating preceding vehicle (11) through a wireless communication; and
an acceleration control device (20, 30, 40) that is configured to cause the own vehicle (10) to travel following the communicating preceding vehicle (11) by determining a requested acceleration (Gj) of the own vehicle (10) on the basis of the communicating preceding vehicle information and by controlling an acceleration of the own vehicle (10) such that the acceleration of the own vehicle (10) corresponds to the requested acceleration (Gj), wherein

the acceleration control device (20, 30, 40) is configured to forbid the following travel of the own vehicle (10) targeting the communicating preceding vehicle (11) when the communicating preceding vehicle information includes a following travel stop request for requesting the stop of the following travel of the own vehicle (10) targeting the communicating preceding vehicle (11) (see a determination "No" at a step 220 of FIG. 2).
Preferably, the wireless communication device (80, 81) is configured to send own vehicle information including acceleration information on the acceleration of the own vehicle (10) to the outside of the own vehicle (10) through the wireless communication; the acceleration control device (20, 30, 40) is configured to control the acceleration of the own vehicle (10); and the wireless communication device (80, 81) is further configured to send a following travel stop request for causing another vehicle to stop an execution of a control for controlling the acceleration of the other vehicle on the basis of the own vehicle information.
According to the first aspect of the present invention, when the stop of the following travel of the own vehicle targeting the communicating preceding vehicle is requested to the own vehicle, the following travel of the own vehicle is forbidden.

A second aspect of the present invention relates to a control apparatus of a vehicle, which apparatus comprises:

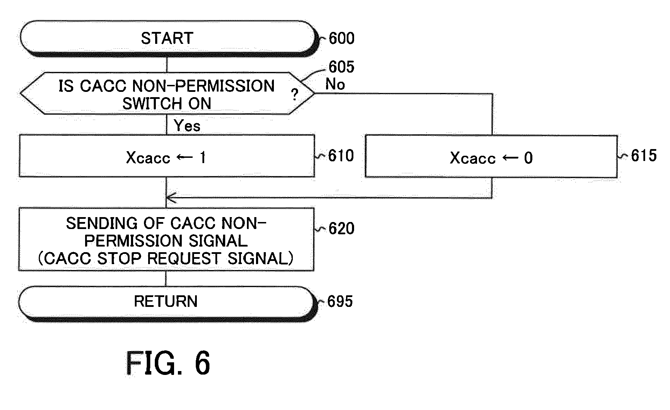

a wireless communication device (80, 81) that is configured to send own vehicle information including acceleration information on an acceleration of an own vehicle (10) to the outside of the own vehicle (10) through a wireless communication; and
an acceleration control device (20, 30, 40) that is configured to control the acceleration of the own vehicle (10), wherein

the wireless communication device (80, 81) is configured to send a following travel stop request for causing another vehicle to stop an execution of a control for controlling the acceleration of the other vehicle on the basis of the own vehicle information to cause the other vehicle to travel following the own vehicle (10) (see steps 610 and 620 of FIG. 6).

According to the second aspect of the present invention, when the driver of the own vehicle does not want the following vehicle to travel following the own vehicle, the stop of the following travel of the following vehicle can be requested to the following vehicle. As a result, under the condition that the following vehicle is configured to stop the following travel of the following vehicle targeting the vehicle traveling in front of the following vehicle when the stop of the following travel of the following vehicle is requested, it is possible to cause the following vehicle to stop the following travel.

A third aspect of the present invention relates to a following travel system including vehicles, each vehicle comprising:

a wireless communication device (80, 81) that is configured to send communication information including acceleration information on an acceleration of an own vehicle (10) to the outside of the own vehicle (10) through a wireless communication and to receive the communication information sent from a communicating preceding vehicle (11) traveling in front of the own vehicle (10) through the wireless communication; and
an acceleration control device that is configured to determine a requested acceleration (Gj) of the own vehicle (10) on the basis of the communication information (Gs, Gas) sent from the communicating preceding vehicle (11) and to control the acceleration of the own vehicle (10) such that the acceleration of the own vehicle (10) corresponds to the requested acceleration (Gj) to cause the own vehicle (10) to travel following the communicating preceding vehicle (11), wherein

the wireless communication device of each of the vehicles is configured to send a following travel stop request for requesting a stop of the following travel of the vehicle traveling behind the own vehicle as one of the communication information (see steps 610 and 620 of FIG. 6), and
the acceleration control device of each of the vehicles is configured to forbid the following travel targeting the communicating preceding vehicle when the communication information sent form the communicating preceding vehicle includes the following travel stop request (see a determination "No" at a step 220 of FIG. 2).

According to the third aspect of the present invention, when the driver of each of the vehicles does not want the following vehicle to travel following the own vehicle, it is possible to stop the following travel of the following vehicle.

A fourth aspect of the present invention relates to a control method of a vehicle, comprising the steps of:

acquiring communicating preceding vehicle information including acceleration information on an acceleration (Gs, Gas) of a communicating preceding vehicle (11) traveling in front of an own vehicle (10) from the communicating preceding vehicle (11) through a wireless communication;
causing the own vehicle (10) to travel following the communicating preceding vehicle (11) by determining a requested acceleration (Gj) of the own vehicle (10) on the basis of the communicating preceding vehicle information and by controlling an acceleration of the own vehicle (10) such that the acceleration of the own vehicle (10) corresponds to the requested acceleration (Gj); and
forbidding the following travel of the own vehicle (10) targeting the communicating preceding vehicle (11) when the communicating preceding vehicle information includes a following travel stop request for requesting the stop of the following travel of the own vehicle (10) targeting the communicating preceding vehicle (11).

Preferably, the control method further comprises the steps of:

sending own vehicle information including acceleration information on the acceleration of the own vehicle (10) to the outside of the own vehicle (10) through the wireless communication;
controlling the acceleration of the own vehicle (10); and
sending a following travel stop request for causing another vehicle to stop an execution of a control for controlling the acceleration of the other vehicle on the basis of the own vehicle information.

Further, in the above description, for facilitating understanding of the present invention, elements of the present invention corresponding to elements of an embodiment described later are denoted by reference symbols used in the description of the embodiment accompanied with parentheses. However, the elements of the present invention are not limited to the elements of the embodiment defined by the reference symbols. The other effects, features and accompanied advantages of the present invention can be easily understood from the description of the embodiment of the present invention along with the drawings.

**BRIEF DESCRIPTION OF THE DRAWINGS**

FIG. 1 shows a general configuration view of a control apparatus of a vehicle according to an embodiment of the present invention and the vehicle installed with the control apparatus.
FIG. 2 shows a flowchart of a routine executed by a CPU of a vehicle control ECU shown in FIG. 1.
FIG. 3 shows a flowchart of a routine executed by the CPU.
FIG. 4 shows a flowchart of a routine executed by the CPU.
FIG. 5(A) shows a look-up table used for acquiring a second correction coefficient for an acceleration on the basis of an inter-vehicle time.
FIG. 5(B) shows a look-up table used for acquiring a second correction coefficient for a deceleration on the basis of the inter-vehicle time.
FIG. 5(C) shows a look-up table used for acquiring a third correction coefficient for an acceleration on the basis of a traveling speed of an own vehicle.
FIG. 5(D) shows a look-up table used for acquiring a third correction coefficient for a deceleration on the basis of the traveling speed of the own vehicle.
FIG. 6 shows a flowchart of a routine executed by the CPU.

**DESCRIPTION OF THE PREFERRED EMBODIMENTS**

Below, a control apparatus of a vehicle according to an embodiment of the present invention will be described with reference to the drawings. Hereinafter, the control apparatus according to the embodiment will be referred to as "the embodiment control apparatus". In the description, the drawings and the claims, the own vehicle is a subject vehicle, to which the present invention is applied and the preceding vehicle is a vehicle which travels in front of the own vehicle, is acquired by a sensor installed in the own vehicle as described later and outputs information permitted to be used by the control apparatus of the own vehicle to change a control for causing the own vehicle to travel.

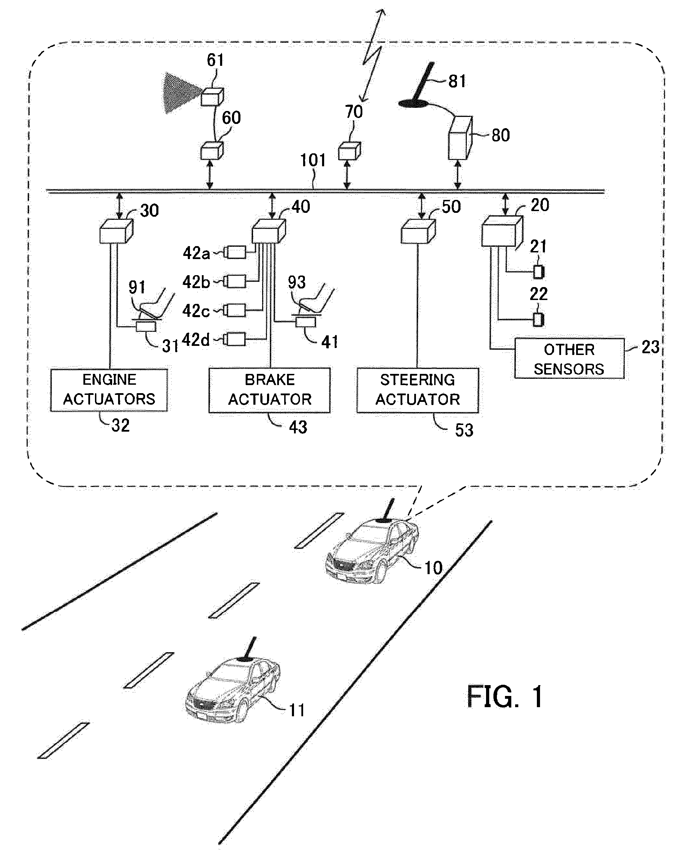

As shown in FIG. 1, the embodiment control apparatus is applied to a vehicle (an own vehicle) 10. The own vehicle 10 comprises a vehicle control ECU 20, an engine control ECU 30, an acceleration pedal operation amount sensor 31, a shift position sensor 33, a brake control ECU 40, a brake pedal operation amount sensor 41, vehicle wheel speed sensors 42a to 42d, a steering control ECU 50, a sensor ECU 60, an own vehicle sensor 61, a GPS device 70, a wireless communication control ECU 80 and a wireless antenna 81. A preceding vehicle 11 traveling in front or the own vehicle 10 and a following vehicle (not shown) traveling behind the own vehicle 10 have the same configuration as the configuration of the own vehicle 10, respectively.

The vehicle control ECU 20 can send data to and receive data from, that is, can communicate with the engine control ECU 30, the brake control ECU 40, the steering control ECU 50, the sensor ECU 60, the GPS device 70 and the wireless communication control ECU 80 via a sensor system CAN (i.e., a sensor system Controller Area Network) 101. Each of the ECUs is an electronic control unit and includes, as a main part, a microcomputer including a CPU, a ROM, a RAM, an interface and the like. The CPU is configured or programmed to execute instructions (or programs) stored in a memory (i.e., the ROM) to realize various functions described later.

The vehicle control ECU 20 is electrically connected to a cooperative following travel control request switch 21 which is an ON-OFF switch, a cooperative following travel control non-permission switch 22 which is an ON-OFF switch and various sensors 23. Hereinafter, the cooperative following travel control request switch 21 will be referred to as "the CACC switch 21" and the cooperative following travel control non-permission switch 22 will be referred to as "the CACC non-permission switch 22".

When the CACC switch 21 is set to an ON-position by an occupant (in particular, a driver) of the own vehicle 10, a start of an execution of a cooperative following travel control described later is requested to the vehicle control ECU 20. The cooperative following travel control includes an inter-vehicle distance control described later.

When the CACC non-permission switch 22 is set to an ON-position by the driver of the own vehicle 10, the vehicle control ECU 20 sets a value of a flag Xcacc indicating whether or not an execution of a cooperative following travel control of the following vehicle targeting the own vehicle 10 is permitted to "1 ". Hereinafter, the flag Xcacc will be referred to as "the CACC non-permission flag Xcacc". When the value of the CACC non-permission flag Xcacc is "1 ", this flag Xcacc indicates that the driver of the own vehicle 10 does not permit the execution of the cooperative following travel control of the following vehicle targeting the own vehicle 10. In other words, when the value of the CACC non-permission flag Xcacc is "1 ", this flag Xcacc indicates that the driver of the own vehicle 10 requests the stop of the execution of the cooperative following travel control of the following vehicle targeting the own vehicle 10.

On the other hand, when the CACC non-permission switch 22 is set to an OFF-position, the vehicle control ECU 20 sets the value of the CACC non-permission flag Xcacc to "0". When the value of the CACC non-permission flag Xcacc is "0", this flag Xcacc indicates that the driver of the own vehicle 10 permits the execution of the cooperative following travel control of the following vehicle targeting the own vehicle 10.

The vehicle control ECU 20 sends a signal Scass indicating the value of the CACC non-permission flag Xcacc to the outside of the own vehicle 10 via the wireless communication control ECU 80 and the wireless antenna 81. Hereinafter the signal Scacc will be referred to as "the CACC non-permission signal Scacc" or "the CACC stop request signal Scacc". On the other hand, when the wireless communication control ECU 80 receives the CACC non-permission signal Scacc or the CACC stop request signal Scacc from the preceding vehicle 11 via the wireless antenna 81, the wireless communication control ECU 80 stores the value of the CACC non-permission flag Xcacc indicated by the received CACC non-permission signal Scacc in the RAM of the wireless communication control ECU 80.

The engine control ECU 30 is known and is configured or programmed to acquire detection signals from sensors (partially not shown) that detect various engine operation state amounts, respectively. In particular, the engine control ECU 30 is electrically connected to the acceleration pedal operation amount sensor 31.

The acceleration pedal operation amount sensor 31 detects an operation amount Accp of an acceleration pedal 91 or an acceleration operation element 91 and outputs a detection signal expressing the operation amount Accp to the engine control ECU 30. The engine control ECU 30 is configured or programmed to acquire the acceleration pedal operation amount Accp on the basis of the detection signal, calculate or acquire a requested acceleration Gj on the basis of the acquired acceleration pedal operation amount Accp and store the calculated requested acceleration Gj in the RAM of the engine control ECU 30. It should be noted that the engine control ECU 30 may be configured or programmed to calculate the requested acceleration Gj on the basis of a traveling speed SPDj of the own vehicle 10 acquired as described later and an engine speed NE. Hereinafter, the traveling speed SPDj will be referred to as "the own vehicle speed SPDj".

Further, engine actuators 32 including a throttle valve actuator (not shown) are electrically connected to the engine control ECU 30. The engine control ECU 30 is configured or programmed to activate the engine actuators 32 to change a torque generated by the engine (not shown) of the own vehicle 10 such that an acceleration of the own vehicle 10 approaches the requested acceleration Gj when the requested acceleration Gj of the own vehicle 10 is a positive value, that is, when the acceleration of the own vehicle 10 is requested.

The brake control ECU 40 is known and is configured or programmed to acquire detection signals from sensors (partially not shown) that detects various vehicle operation state amounts. In particular, the brake control ECU 40 is electrically connected to the brake pedal operation amount sensor 41 and the vehicle wheel speed sensors 42a to 42d.

The brake pedal operation amount sensor 41 detects an operation amount Brkp of a brake pedal 93 or a brake operation element 93 and outputs a signal expressing the operation amount Brkp to the brake control ECU 40. Hereinafter, the operation amount Brkp will be referred to as "the brake pedal operation amount Brkp". The brake control ECU 40 is configured or programmed to acquire the brake pedal operation amount Brkp on the basis of the detection signal sent from the brake pedal operation amount sensor 41, calculate or acquire the requested acceleration Gj including the requested deceleration on the basis of the acquired brake pedal operation amount Brkp and store the calculated requested acceleration Gj in the RAM of the brake control ECU 40. It should be noted that the brake control ECU 40 may be configured or programmed to calculate the requested acceleration Gj on the basis of the own vehicle speed SPDj acquired as described later.

The vehicle wheel speed sensors 42a to 42d are provided on the respective vehicle wheels of the own vehicle 10. The vehicle wheel speed sensors 42a to 42d detect vehicle wheel rotation speeds $\omega a$ to $\omega d$ of the vehicle wheels, respectively and output detection signals expressing the vehicle wheel rotation speeds $\omega a$ to $\omega d$, respectively to the brake control ECU 40.

The brake control ECU 40 is configured or programmed to acquire the vehicle wheel rotation speeds $\omega a$ to $\omega d$ on the basis of the detection signals and store the acquired vehicle wheel rotation speeds $\omega a$ to $\omega d$ in the RAM of the brake control ECU 40.

Further, the brake control ECU 40 is configured or programmed to calculate or acquire an average value $\omega ave$ of the acquired vehicle wheel rotation speeds $\omega a$ to $\omega d$ ($\omega ave = (\omega a + \omega b + \omega c + \omega d)/4$) and store the calculated average value $\omega ave$ as the own vehicle speed SPDj of the own vehicle 10 in the RAM of the brake control ECU 40. Hereinafter, the average value $\omega ave$ will be referred to as "the average vehicle wheel rotation speed $\omega ave$".

Alternatively, the brake control ECU 40 may be configured or programmed to acquire the own vehicle speed SPDj on the basis of a detection signal output from a sensor (not shown) that detects a rotation speed of a propeller shaft of the own vehicle 10 in place of acquiring the average vehicle wheel rotation speed ωave as the own vehicle speed SPDj.

Further, the brake control ECU 40 is configured or programmed to calculate or acquire an amount of a change of the acquired own vehicle speed SPDj per minute unit time, that is, calculate a time derivative value of the own vehicle speed SPDj as an actual acceleration Gaj (= dSPDj/dt) and store the calculated actual acceleration Gaj in the RAM of the brake control ECU 40.

Further, a brake actuator 43 of a friction braking device or the like is electrically connected to the brake control ECU 40. The brake control ECU 40 is configured or programmed to activate the brake actuator 43 to generate friction braking forces at the vehicle wheels of the own vehicle 10, respectively such that the deceleration of the own vehicle 10 approaches the requested acceleration Gj corresponding to the requested deceleration when the requested acceleration Gj of the own vehicle 10 is a negative value, that is, when the deceleration of the own vehicle 10 is requested.

It should be noted that the vehicle control ECU 20, the engine control ECU 30 and the brake control ECU 40 together accelerates or decelerates the own vehicle 10. Therefore, the ECUs 20, 30 and 40 together configure an acceleration control device for controlling the acceleration of the own vehicle 10.

The steering control ECU 50 is known and is configured or programmed to acquire detection signals from sensors (not shown) that detects various vehicle operation state amounts, respectively. Further, a steering actuator 53 such as a motor of an electric power steering device (not shown) is electrically connected to the steering control ECU 50.

The sensor ECU 60 is electrically connected to the own vehicle sensor 61. The own vehicle sensor 61 is a known millimeter wave radar sensor. The own vehicle sensor 61 outputs a millimeter wave ahead of the own vehicle 10. The millimeter wave is reflected by the preceding vehicle 11. The own vehicle sensor 61 receives this reflected millimeter wave.

The sensor ECU 60 is configured or programmed to detect the preceding vehicle 11 traveling immediately in front of the own vehicle 10 on the basis of the reflected millimeter wave received by the own vehicle sensor 61. Further, the sensor ECU 60 is configured or programmed to acquire a difference dSPD between the own vehicle speed SPDj and a traveling speed SPDs of the preceding vehicle 11 (i.e., a relative traveling speed dSPD between the own vehicle 10 and the preceding vehicle 11) (dSPD = SPDs - SPDj), an inter-vehicle distance D between the own vehicle 10 and the preceding vehicle 11 and a relative orientation of the preceding vehicle 11 with respect to the own vehicle 10 in a chronological manner each time a predetermined time elapses on the basis of a phase difference between the millimeter wave output from the own vehicle sensor 61 and the reflected millimeter wave received by the own vehicle sensor 61, a damping level of the reflected millimeter wave, a detection time of the reflected millimeter wave and the like and store the acquired relative speed dSPD, the inter-vehicle distance D, the relative orientation and the like in the RAM of the sensor ECU 60.

Therefore, the sensor ECU 60 constitutes an own vehicle sensor device that detects or acquires the preceding vehicle 11 on the basis of the reflected millimeter wave detected by the own vehicle sensor 61 and acquire the inter-vehicle distance D between the own vehicle 10 and the preceding vehicle 11 on the basis of the reflected millimeter wave detected by the own vehicle sensor 61.

The GPS device 70 is known and acquires a latitude and a longitude of a point where the own vehicle 10 travels on the basis of a GPS signal sent from an artificial satellite and stores the acquired latitude and longitude as a position of the own vehicle 10 in the RAM of the GPS device 70.

The wireless communication control ECU 80 is electrically connected to the wireless antenna 81 used for performing an inter-vehicle wireless communication. The wireless communication control ECU 80 is configured or programmed to receive communication information or communicating vehicle information and data, which identifies the communicating vehicles, sent from the communicating vehicles through a wireless communication each time a predetermine time elapses and store the received data in the RAM of the wireless communication control ECU 80. Each of the communicating vehicles is different from the own vehicle and has a function that performs the wireless communication. The communicating vehicle information sent from each of the communicating vehicles includes data indicating operation state amounts of each of the communicating vehicles.

The data, which indicates the operation state amounts of each of the communicating vehicles, received by the wireless communication control ECU 80 of the own vehicle 10 through the inter-vehicle wireless communication, includes data acquired by the vehicle control ECU 20, the engine control ECU 30, the brake control ECU 40 and the like of each of the communicating vehicles on the basis of detection signals output from various sensors of each of the communicating vehicles, data of states of the actuators of each of the communicating vehicles, to which the vehicle control ECU 20, the engine control ECU 30, the brake control ECU 40 and the like of each of the communicating vehicles send activation signals and the like.

In particular, the data sent from the communicating vehicle as communicated data includes data (A) to (G) described below.

(A) A traveling speed SPDs of the communicating vehicle acquired by the brake control ECU 40 of the communicating vehicle. Hereinafter, this traveling speed SPDs will be referred to as "the communicating vehicle speed SPDs".

(B) A position of the communicating vehicle acquired by the GPS device 70 of the communicating vehicle.

(C) A requested acceleration Gs of the communicating vehicle calculated by the engine control ECU 30 of the communicating vehicle on the basis of the acceleration pedal operation amount Accp of the communicating vehicle when any of a cooperative following travel control or a CACC (Cooperative Adaptive Cruise Control) and an inter-vehicle distance control or an ACC (Adaptive Cruise Control) is not executed in the communicating vehicle.

(D) The requested acceleration Gs of the communicating vehicle corresponding to a requested deceleration of the communicating vehicle calculated by the brake control ECU 40 of the communicating vehicle on the basis of the brake pedal operation amount Brkp of the communicating vehicle when any of the cooperative following travel control and the inter-vehicle distance control is not executed in the communicating vehicle.

(E) The requested acceleration Gs of the communicating vehicle calculated by the vehicle control ECU 20 of the communicating vehicle on the basis of the requested acceleration Gss of a vehicle traveling immediately in front of the communicating vehicle in order to cause the communicating vehicle to travel following the vehicle traveling immediately in front of the communicating vehicle when any of the cooperative following travel control and the inter-vehicle distance control is executed in the communicating vehicle.

(F) An actual acceleration Gas of the communicating vehicle acquired by the brake control ECU 40 of the communicating vehicle on the basis of the average vehicle wheel speed $\omega$ave of the communicating vehicle.

(G) The CACC non-permission signal Scacc.

Further, the wireless communication control ECU 80 is configured or programmed to send or output the above-described data indicating the operation state amounts of the own vehicle 10 to the outside of the own vehicle 10 each time a predetermined time elapses.

It should be noted that when any of the cooperative following travel control and the inter-vehicle distance control is executed in the own vehicle 10 and the preceding vehicle 11, the requested acceleration Gj of the own vehicle 10 sent from the wireless communication control ECU 80 of the own vehicle 10 to a vehicle traveling immediately behind the own vehicle 10 as the above-described data is a requested acceleration of the own vehicle 10 calculated on the basis of the requested acceleration Gs of the preceding vehicle 11.

Therefore, when any of the cooperative following travel control and the inter-vehicle distance control is executed in the preceding vehicle 11 and the vehicle traveling immediately in front of the preceding vehicle 11, the requested acceleration Gs of the preceding vehicle 11 received by the wireless communication control ECU 80 of the own vehicle 10 from the preceding vehicle 11 as the above-described data through the wireless communication is a requested acceleration of the preceding vehicle 11 calculated by the vehicle control ECU 20 of the preceding vehicle 11 on the basis of the requested acceleration Gss of the vehicle traveling immediately in front of the preceding vehicle 11.

<Summary of Cooperative Following Travel Control>

Below, a summary of the cooperative following travel control or the CACC executed by the embodiment control apparatus will be described. The embodiment control apparatus starts to execute the cooperative following travel control when the CACC switch 21 is positioned at an ON-position by the occupant, in particular, the driver of the own vehicle 10.

When the vehicle control ECU 20 starts to execute the cooperative following travel control, the vehicle control ECU 20 starts to execute a process that identifies a communicating vehicle detected or acquired by the own vehicle sensor 61 among the communicating vehicles, which sends data to the own vehicle 10, as a communicating preceding vehicle on the basis of data acquired by the own vehicle sensor 61 and the sensor ECU 60 and data acquired by the wireless antenna 81 and the wireless communication control ECU 80.

For example, the vehicle control ECU 20 estimates a traveling speed of a candidate vehicle, which is a candidate of the communicating vehicle to be identified as the communicating preceding vehicle 11, on the basis of the relative vehicle speed dSPD and the own vehicle speed SPDj acquired by the sensor ECU 60. When a degree of a similarity between the estimated traveling speed of the candidate vehicle and the traveling speed of the candidate vehicle sent from the candidate vehicle through the wireless communication is high, the vehicle control ECU 20 identifies that candidate vehicle as the communicating preceding vehicle 11. For example, a method described in JP 5522193 B can be used as a method for identifying the communicating preceding vehicle 11.

Further, in this embodiment, a target value Ttgt of a value T obtained by dividing the inter-vehicle distance D by the own vehicle speed SPDj (T = D/SPDj), is previously set. Hereinafter, the value Ttgt will be referred to as "the target inter-vehicle time Ttgt". The target inter-vehicle time Ttgt is set to a predetermined constant value. In this regard, the target inter-vehicle time Ttgt may be variably set by a switch (not shown) operated by the driver of the own vehicle 10.

<Feedback Control>

The embodiment control apparatus controls the acceleration including the deceleration of the own vehicle 10 such that the value T obtained by dividing the actual inter-vehicle distance D by the actual own vehicle speed SPDj corresponds to the target inter-vehicle time Ttgt when the CACC switch 21 is set at the ON-position by the driver of the own vehicle 10. Hereinafter, the value T will be referred to as "the inter-vehicle time T".

For example, when the communicating preceding vehicle 11 accelerates under the condition that the inter-vehicle time T corresponds to the target inter-vehicle time Ttgt and the own vehicle speed SPDj is constant, the inter-vehicle distance D increases. As a result, the inter-vehicle time T becomes larger than the target inter-vehicle time Ttgt and thus, the embodiment control apparatus accelerates the own vehicle 10 to decrease the inter-vehicle time T.

On the other hand, when the communicating preceding vehicle 11 decelerates under the condition that the inter-vehicle time T corresponds to the target inter-vehicle time Ttgt and the own vehicle speed SPDj is constant, the inter-vehicle distance D decreases. As a result, the inter-vehicle time T becomes smaller than the target inter-vehicle time Ttgt and thus, the embodiment control apparatus decelerates the own vehicle 10 to increase the inter-vehicle time T.

When the embodiment control apparatus accelerates or decelerates the own vehicle 10, the embodiment control apparatus calculates or sets a requested acceleration Gj of the own vehicle 10 as described below and controls the engine control ECU 30 to cause the engine control ECU 30 to control the operation of the engine actuators 32 of the engine or controls the brake control ECU 40 to cause the brake control ECU 40 to control the operation of the brake actuator 43 of the braking device such that the requested acceleration Gj is achieved, that is, such that the acceleration of the own vehicle 10 corresponds to the requested acceleration Gj. The requested acceleration Gj can be any of a positive value for accelerating the own vehicle 10 and a negative value for decelerating the own vehicle 10. Thereby, the requested acceleration Gj can be referred to as a requested acceleration/deceleration Gj.

The embodiment control apparatus multiplies the target inter-vehicle time Ttgt by the actual own vehicle speed SPDj to calculate a target inter-vehicle distance Dtgt (= Ttgt x SPDj). In this embodiment, the target inter-vehicle time Ttgt is set to a constant value and thus, the calculated target inter-vehicle distance Dtgt increases as the actual own vehicle speed SPDj increases.

Further, the embodiment control apparatus calculates a difference dD of the target inter-vehicle distance Dtgt with respect to the actual inter-vehicle distance D (dD = D - Dtgt). Hereinafter, the difference dD will be referred to as "the inter-vehicle distance difference dD". The calculated inter-vehicle distance difference dD is a positive value when the actual inter-vehicle distance D is larger than the target inter-vehicle distance Dtgt.

In addition, the embodiment control apparatus acquires the relative traveling speed dSPD detected by the own vehicle sensor 61. The acquired relative traveling speed dSPD is a positive value when the traveling speed SPDs of the communicating preceding vehicle 11 is larger than the own vehicle speed SPDj. Hereinafter, the traveling speed SPDs will be referred to as "the preceding vehicle speed SPDs".

Then, the embodiment control apparatus calculates a total value of a value obtained by multiplying the inter-vehicle distance difference dD by a correction coefficient KFB1 and a value obtained by the relative traveling speed dSPD by a correction coefficient KFB2 as a determination-used calculation value P (= dD x KFB1 + dSPD x KFB2). The correction coefficients KFB1 and KFB2 are set to positive constant values larger than "0", respectively.

When the determination-used calculation value P is a positive value, it can be determined that the acceleration of the own vehicle 10 is needed to maintain or control the inter-vehicle time T at or to the target inter-vehicle time Ttgt, that is, to maintain or control the inter-vehicle distance D at or to the target inter-vehicle distance Dtgt.

In this case, the embodiment control apparatus calculates or acquires a feedback requested acceleration GFB by multiplying the determination-used calculation value P by a correction coefficient KFB3 (GFB = (dD x KFB1 + dSPD x KFB2) x KFB3). The correction coefficient KFB3 is a positive value larger than "0" and equal to or smaller than "1" and decreases as the own vehicle speed SPDj increases. Therefore, when the acceleration of the own vehicle 10 is needed, the calculated feedback requested acceleration GFB is a positive value.

On the other hand, when the determination-used calculation value P is a negative value, it can be determined that the deceleration of the own vehicle 10 is needed to maintain or control the inter-vehicle time T at or to the target inter-vehicle time Ttgt, that is, to maintain or control the inter-vehicle distance D at or to the target inter-vehicle distance Dtgt. In this case, the embodiment control apparatus acquires the determination-used calculation value P as the feedback requested acceleration GFB (= dD x KFB1 + dSPD x KFB2). Therefore, when the deceleration of the own vehicle 10 is needed, the acquired feedback requested acceleration GFB is a negative value.

The embodiment control apparatus can control the inter-vehicle time T to the target inter-vehicle time Ttgt by accelerating or decelerating the own vehicle 10 such that the feedback requested acceleration GFB is achieved. In this regard, the inter-vehicle distance D and the relative traveling speed dSPD acquired by the sensor ECU 60 varies, for example, after the communicating preceding vehicle 11 starts to accelerate or decelerate. Therefore, if the acceleration or deceleration of the own vehicle 10 is controlled only using the feedback requested acceleration GFB, the start timing of the acceleration or deceleration of the own vehicle 10 delays with respect to the start timing of the acceleration or deceleration of the communicating preceding vehicle 11.

<Feedforward Control>

Accordingly, the embodiment control apparatus predicts the start of the acceleration or deceleration of the communicating preceding vehicle 11 on the basis of preceding vehicle acceleration information on the acceleration of the communicating preceding vehicle 11 acquired by the wireless communication control ECU 80 and controls the acceleration of the own vehicle 10 on the basis of the result of the prediction.

In particular, the embodiment control apparatus calculates or estimates or acquires the acceleration Ges of the communicating preceding vehicle 11 on the basis of a value fh(Gs) obtained by filtering the requested acceleration Gs of the communicating preceding vehicle 11 with a high-pass filter and a value hl(Gas) obtained by filtering the actual acceleration Gas of the communicating preceding vehicle 11 with a low-pass filter when the requested acceleration Gs and the actual acceleration Gas of the communicating preceding vehicle 11 have been acquired by the wireless communication control ECU 80. Hereinafter, the estimated acceleration Ges of the communicating preceding vehicle 11 will be simply referred to as "the estimated acceleration Ges".

Alternatively, the embodiment control apparatus acquires or estimates an actual acceleration Gas of the communicating preceding vehicle 11 as the estimated acceleration Ges of the communicating preceding vehicle 11 when only the actual acceleration Gas of the communicating preceding vehicle 11 is acquired by the wireless communication control ECU 80.

When the acceleration of the communicating preceding vehicle 11 is predicted, the calculated or acquired estimated acceleration Ges is a positive value. On the other hand, when the deceleration of the communicating preceding vehicle 11 is predicted, the calculated or acquired estimated acceleration Ges is a negative value.

The embodiment control apparatus calculates or acquires a value obtained by multiplying the calculated or acquired estimated acceleration Ges by a coefficient smaller than "1" as a feedforward requested acceleration GFF. When the acceleration of the communicating preceding vehicle 11 is predicted, the calculated feedforward requested acceleration GFF is a positive value. On the other hand, when the deceleration of the communicating preceding vehicle 11 is predicted, the calculated feedforward requested acceleration GFF is a negative value.

The embodiment control apparatus calculates or acquires a conclusive requested acceleration Gj of the own vehicle 10 by adding the feedforward requested acceleration GFF to the feedback requested acceleration GFB (Gj = GFF + GFB) and controls operations of the engine actuators 32 of the engine or an operation of the brake actuator 43 of the braking device such that the calculated requested acceleration Gj is achieved. When the own vehicle 10 should be accelerated, the calculated requested acceleration Gj is a positive value. On the other hand, when the own vehicle 10 should be decelerated, the calculated requested acceleration Gj is a negative value.

It should be noted that the conclusive requested acceleration Gj of the own vehicle 10 which is an acceleration obtained by adding the feedforward requested acceleration GFF to the feedback requested acceleration GFB will be referred to as "the CACC requested G" in some cases. The CACC corresponding to the cooperative following travel control is a control that makes the acceleration of the own vehicle 10 correspond to the CACC requested G. The ACC corresponding to the inter-vehicle distance control is a control that makes the acceleration of the own vehicle 10 correspond to the conclusive requested acceleration Gj corresponding to the feedback requested acceleration GFB without using the feedforward requested acceleration GFF.

The cooperative following travel control can accelerate or decelerate the own vehicle 10 while predicting the acceleration or deceleration of the communicating preceding vehicle 11. Therefore, the inter-vehicle time T can be controlled to the target inter-vehicle time Ttgt with a high following property. In other words, the own vehicle 10 can be caused to travel accurately following the communicating preceding vehicle 11.

When the value of the CACC non-permission flag Xcacc indicated by the CACC non-permission signal Scacc sent from the communicating preceding vehicle 11 through the wireless communication and received by the wireless communication control ECU 80 via the wireless antenna 81, is "1", the embodiment control apparatus forbids the execution of the cooperative following travel control even if the CACC request switch 21 is set to the ON-position. In other words, the embodiment control apparatus forbids the execution of the cooperative following travel control when the embodiment control apparatus receives the following travel stop request for requesting the stop of the following travel of the own vehicle 10 targeting the communicating preceding vehicle 11.

On the other hand, when the value of the CACC non-permission flag Xcacc indicated by the CACC non-permission signal Scacc received from the communicating preceding vehicle 11, is "0" and the CACC request switch 21 is set to the ON-position, the embodiment control apparatus executes the cooperative following travel control.

Thereby, it is possible to forbid the execution of the cooperative following travel control of the own vehicle 10 targeting the communicating preceding vehicle 11 when the driver of the communicating preceding vehicle 11 does not permit the execution of the cooperative following travel control of the own vehicle 10 targeting the communicating preceding vehicle 11, that is, when the stop of the execution of the cooperative following travel control of the own vehicle 10 targeting the communication preceding vehicle 11 is requested.

On the other hand, when the driver of the own vehicle 10 does not permit the execution of the cooperative following travel control of the following vehicle targeting the own vehicle 10, that is, when the driver of the own vehicle 10 sets the CACC non-permission switch 22 of the own vehicle 10 to the ON-position, the embodiment control apparatus sends to the outside of the own vehicle 10 through the wireless communication, a signal (the CACC non-permission signal Scacc or the CACC stop request signal Scacc) indicating that the execution of the cooperative following travel control of the following vehicle targeting the own vehicle 10 is not permitted.

Thereby, when the driver of the own vehicle 10 does not permit the execution of the cooperative following travel control of the following vehicle targeting the own vehicle 10, it is possible to forbid the execution of the cooperative following travel control of the following vehicle targeting the own vehicle 10.

<Actual Operation>

Next, the cooperative following travel control (the CACC) executed by the embodiment control apparatus will be concretely described. The CPU of the vehicle control ECU 20 is programmed or configured to start an execution of a routine shown by a flowchart in FIG. 2 each time a predetermined time elapses. Therefore, at a predetermined timing, the CPU starts to execute this routine from a step 200 and then, proceeds with the process to a step 202 to determine whether or not the CACC switch 21 is positioned at the ON-position.

When the CACC request switch 21 is positioned at the ON-position, the CPU determines "Yes" at the step 202 and then, proceeds with the process to a step 205 to acquire information (communicating vehicle information) on operation state amounts of the communicating vehicles from the wireless communication control ECU 80.

Then, the CPU proceeds with the process to a step 210 to eliminate the communicating vehicle/vehicles, which send to the own vehicle 10, the communicating vehicle information including the CACC non-permission signal Scacc indicating that the value of the CACC non-permission flag Xcacc is "0", from the communicating vehicles which send the communicating vehicle information acquired at the step 205 and are candidates of the communicating preceding vehicle 11. Therefore, even when the communicating vehicle or one of the communicating vehicles eliminated at the step 210 is the communicating preceding vehicle 11, this communicating vehicle is not subject to a process described later for identifying the communicating preceding vehicle 11. As a result, the cooperative following travel control targeting the eliminated communicating vehicle and the inter-vehicle distance control targeting the eliminated communicating vehicle are not executed. When the cooperative following travel control targeting the eliminated communicating vehicle or the inter-vehicle distance control targeting the eliminated communicating vehicle has been executed, the execution of the cooperative following travel control or inter-vehicle distance control is stopped.

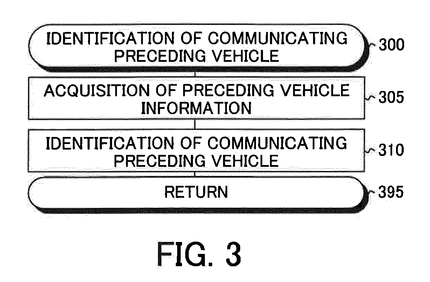

Then, the CPU proceeds with the process to a step 215 to start an execution of a routine shown by a flowchart in FIG. 3 to identify the communicating preceding vehicle 11. That is, when the CPU proceeds with the process to the step 205, the CPU starts to execute the routine from a step 300 of FIG. 3 and then, executes processes of steps 305 and 310 described below. Then, the CPU proceeds with the process to a step 220 of FIG. 2 via a step 395.

Step 305 : The CPU acquires preceding vehicle information including data of the operation state amounts of the preceding vehicle from the sensor ECU 60.

Step 310 : The CPU identifies the communicating preceding vehicle 11 among the communicating vehicles on the basis of the operation state amounts of the communicating vehicles, which have not been eliminated from the candidates of the communicating preceding vehicle 11 at the step 210 of FIG. 2, included in the communicating vehicle information and the operation state amounts of the preceding vehicle 11 included in the preceding vehicle information acquired at the step 305. For example, the CPU calculates or estimates the traveling speed of the preceding vehicle on the basis of the relative traveling speed dSPD acquired by the own vehicle sensor 61 and the own vehicle speed SPDj. Then, when the degree of the similarity between the calculated traveling speed of the preceding vehicle and the traveling speed of the communicating vehicle sent from the communicating vehicle through the wireless communication is large, the CPU identifies that communicating vehicle as the communicating preceding vehicle 11.

It should be noted that after a particular communicating vehicle is identified as the communicating preceding vehicle 11 by the execution of the process of the step 310 once, the identified communicating vehicle is employed as the communicating preceding vehicle 11 until the CPU determines that the identified communicating vehicle is not the preceding vehicle 11.

When the CPU proceeds with the process to the step 220, the CPU determines whether or not the identification of the communicating preceding vehicle 11 has been completed at the step 215. When the identification of the communicating preceding vehicle 11 has been completed, the CPU determines "Yes" at the step 220 and then, sequentially executes processes of steps 230 to 240 described below. Thereafter, the CPU proceeds with the process to a step 245.

Step 230 : The CPU calculates or acquires, as the estimated acceleration Ges (= fh(Gs) + fl(Gas)), a total value of a value obtained by multiplying a value fh(Gs) obtained by filtering the requested acceleration Gs of the communicating preceding vehicle 11 with the high-pass filter by a predetermined positive coefficient kh (in this embodiment, "1 ") and a value fl(Gas) obtained by filtering the actual acceleration Gas of the communicating preceding vehicle 11 with the low-pass filter when the requested acceleration Gs and the actual acceleration Gas are included in the communicating vehicle information acquired at the step 205 and relating to the communicating vehicle identified as the communicating preceding vehicle 11 at the step 215. Hereinafter, the communicating vehicle information will be referred to as "the communicating preceding vehicle information".

Alternatively, the CPU employs the actual acceleration Gas as the estimated acceleration Ges when no requested acceleration Gs is included in the communicating preceding vehicle information and only the actual acceleration Gas is included in the communicating preceding vehicle information.

Step 235 : The CPU acquires the inter-vehicle distance D from the sensor ECU 60 and acquires the own vehicle speed SPDj from the brake control ECU 40. The sensor ECU 60 executes a separate routine to acquire the inter-vehicle distance D on the basis of the detection signal of the own vehicle sensor 61 and store the acquired inter-vehicle distance D in the RAM of the sensor ECU 60. The brake control ECU 40 executes a separate routine to acquire the own vehicle speed SPDj on the basis of the detection signal of the vehicle wheel speed sensors 42 and store the acquired own vehicle speed SPDj in the RAM of the brake control ECU 40.

Step 240 : The CPU calculates or acquires a value obtained by dividing the inter-vehicle distance D by the own vehicle speed SPDj as the inter-vehicle time T (= D/SPDj). The inter-vehicle time T is a time taken for the own vehicle 10 to travel for the inter-vehicle distance D at the own vehicle speed SPDj.

Next, the CPU proceeds with the process to the step 245 to determine whether or not the estimated acceleration Ges calculated or acquired at the step 230 is larger than zero. When the estimated acceleration Ges is larger than zero, the CPU determines "Yes" at the step 245 and then, sequentially executes processes of steps 250 to 254 described below. Then, the CPU proceeds with the process to a step 260.

Step 250 : The CPU sets a first correction coefficient Klac for the acceleration as the first correction coefficient K1. The first correction coefficient Klac for the acceleration is a constant value smaller than "1 ". In this regard, the first correction coefficient Klac for the acceleration may be "1".

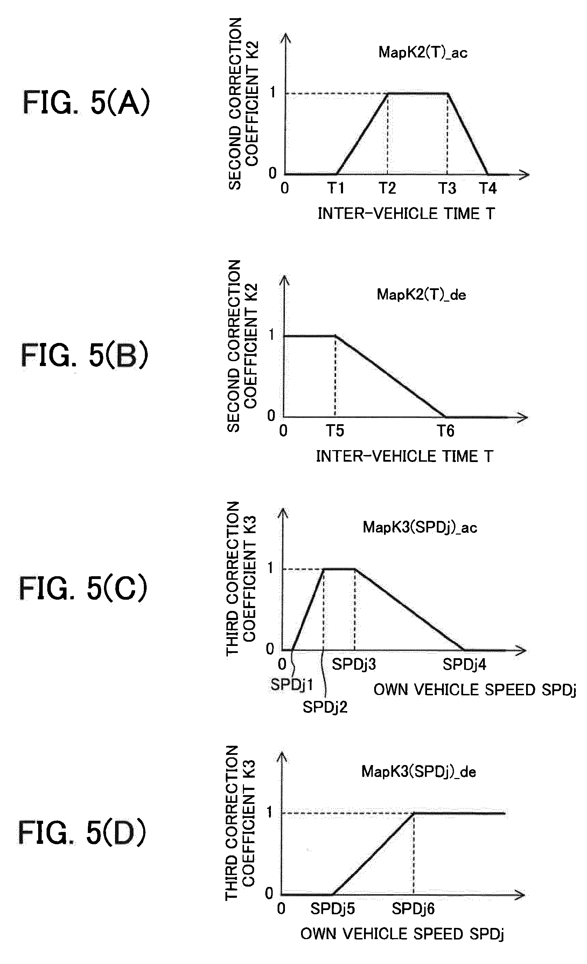

Step 252 : The CPU applies the inter-vehicle time T to a look-up table MapK2(T)_ac shown in FIG. 5(A) to acquire the second correction coefficient K2 for the acceleration. According to the look-up table MapK2(T)_ac, when the inter-vehicle time T is between "0" and a time T1, the second correction coefficient K2 for the acceleration is "0". When the inter-vehicle time T is between the time T1 and a time T2, the second correction coefficient K2 for the acceleration is a value equal to or smaller than "1" and increases as the inter-vehicle time T increases. When the inter-vehicle time T is between the time T2 and a time T3, the second correction coefficient K2 for the acceleration is "1 ". When the inter-vehicle time T is between the time T3 and a time T4, the second correction coefficient K2 for the acceleration is a value equal to or smaller than "1" and decreases as the inter-vehicle time T increases. When the inter-vehicle time T is larger than the time T4, the second correction coefficient K2 for the acceleration is "0".

Step 254 : The CPU applies the own vehicle speed SPDj to a look-up table MapK3(SPDj)_ac shown in FIG. 5(C) to acquire the third correction coefficient K3 for the acceleration. According to the look-up table MapK3(SPDj)_ac, when the own vehicle speed SPDj is between "0" and a vehicle speed SPDj1, the third correction coefficient K3 for the acceleration is "0". When the own vehicle speed SPDj is between the vehicle speed SPDj1 and a vehicle speed SPDj2, the third correction coefficient K3 for the acceleration is equal to or smaller than "1" and increases as the own vehicle speed SPDj increases. When the own vehicle speed SPDj is between the vehicle speed SPDj2 and a vehicle speed SPDj3, the third correction coefficient K3 for the acceleration is "1 ". When the own vehicle speed SPDj is between the vehicle speed SPDj3 and a vehicle speed SPDj4, the third correction coefficient K3 for the acceleration is equal to or smaller than "1" and decreases as the own vehicle speed SPDj increases. When the own vehicle speed SPDj is larger than the vehicle speed SPDj4, the third correction coefficient K3 for the acceleration is "0".

When the estimated acceleration Ges is equal to or smaller than "0" upon the execution of the process of the step 245, the CPU determines "No" at the step 245 and then, sequentially executes processes of steps 255 to 259 described below. Then, the CPU proceeds with the process to a step 260.

Step 255 : The CPU sets a first correction coefficient Klde for the deceleration as the first correction coefficient K1. The first correction coefficient Klde for the deceleration is a constant value smaller than "1" and equal to or larger than the first correction coefficient Klac for the acceleration. In this regard, the first correction coefficient Klde for the deceleration may be "1 ".

Step 257 : The CPU applies the inter-vehicle time T to a look-up table MapK2(T)_de shown in FIG. 5(B) to acquire the second correction coefficient K2 for the deceleration. According to the look-up table MapK2(T)_de, when the inter-vehicle time T is between "0" and a time T5, the second correction coefficient K2 for the deceleration is "1 ". When the inter-vehicle time T is between the time T5 and a time T6, the second correction coefficient K2 for the deceleration is equal to or smaller than "1" and decreases as the inter-vehicle time T increases. When the inter-vehicle time T is larger than the time T6, the second correction coefficient K2 for the deceleration is "0".

Step 259 : The CPU applies the own vehicle speed SPDj to a look-up table MapK3(SPDj)_de shown in FIG. 5(D) to acquire the third correction coefficient K3 for the deceleration. According to the look-up table MapK3(SPDj)_de, when the own vehicle speed SPDj is between "0" and a vehicle speed SPDj5, the third correction coefficient K3 for the deceleration is "0". When the own vehicle speed SPDj is between the vehicle speed SPDj5 and a vehicle speed SPDj6, the third correction coefficient K3 for the deceleration is equal to or smaller than "1" and increases as the own vehicle speed SPDj increases. When the own vehicle speed SPDj is larger than the vehicle speed SPDj6, the third correction coefficient K3 for the deceleration is equal to or smaller than "1" and increases as the own vehicle speed SPDj increases.

Then, the CPU proceeds with the process to the step 260, the CPU calculates or acquires the feedforward requested acceleration GFF in accordance with a following expression (1).

$$GFF = Ges \times K1 \times K2 \times K3 \quad ...(1)$$

In the expression (1), the symbol "Ges" is the estimated acceleration calculated at the step 230, the symbol "K1" is the first correction value set at the step 250 or 255, the symbol "K2" is the second correction value set at the step 252 or 257 and the symbol "K3" is the third correction value set at the step 254 or 259.

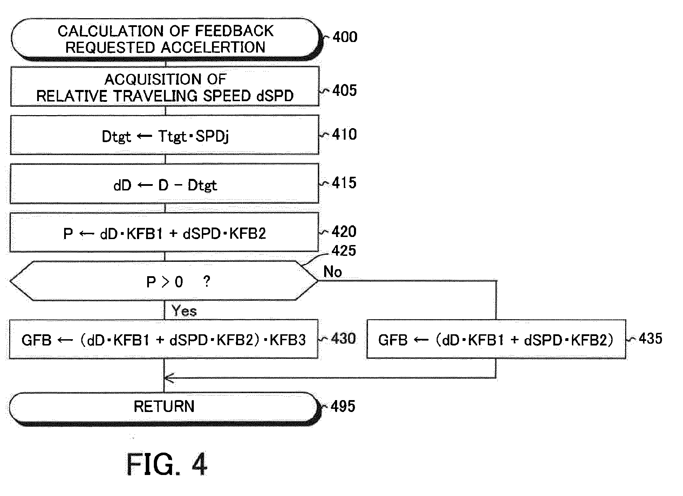

Then, the CPU proceeds with the process to the step 265 to start an execution of a feedback requested acceleration calculation routine shown by a flowchart in FIG. 4 to calculate the feedback requested acceleration GFB. Therefore, when the CPU proceeds with the process to the step 265, the CPU starts to execute the routine from a step 400 of FIG. 4 and then, executes sequentially processes of steps 405 and 420 described below.

Step 405 : The CPU acquires the relative traveling speed dSPD from the sensor ECU 60. The sensor ECU 60 executes a separate routine to acquire the relative traveling speed dSPD on the basis of the detection signal of the own vehicle sensor 61 and store the acquired relative traveling speed dSPD in the RAM of the sensor ECU 60.

Step 410 : The CPU calculates or acquires the target inter-vehicle distance Dtgt by multiplying the target inter-vehicle time Ttgt by the own vehicle speed SPDj acquired at the step 235 of FIG. 2 (Dtgt = Ttgt x SPDj). As described above, the target inter-vehicle time Ttgt is set to a constant value.

Step 415 : The CPU calculates or acquires the inter-vehicle distance difference dD by subtracting the target inter-vehicle distance Dtgt from the inter-vehicle distance D acquired at the step 235 of FIG. 2 (dD = D - Dtgt).

Step 420 : The CPU calculates or acquires the determination-used calculation value P in accordance with a following expression (2).

$$P = dD \times KFB1 + dSPD \times KFB2 \quad ...(2)$$

In the expression (2), the symbol "dD" is the inter-vehicle distance difference calculated at the step 415, the symbol "dSPD" is the relative traveling speed acquired at the step 405 and the symbols "KFB1" and "KFB2" are correction coefficients, respectively, which are positive constant values larger than "0".

Then, the CPU proceeds with the process to a step 425 to determine whether or not the determination-used calculation value P is larger than zero. The determination-used calculation value P larger than zero indicates that the acceleration request due to the inter-vehicle distance D occurs in the own vehicle 10 and the determination-used calculation value P equal to or smaller than zero indicates that no acceleration request due to the inter-vehicle distance D occurs in the own vehicle 10.

When the determination-used calculation value P is larger than zero, the CPU determines "Yes" at the step 425 and then, proceeds with the process to a step 430 to calculate or acquire the feedback requested acceleration GFB in accordance with a following expression (3). Then, the CPU proceeds with the process to a step 270 of FIG. 2 via a step 495.

$$GFB = (dD \times KFB1 + dSPD \times KFB2) \times KFB3 \quad ...(3)$$

In the expression (3), the symbol "KFB3" is a correction coefficient which is a positive value larger than "0" and smaller than "1" and decreases as the own vehicle speed SPDj increases.

On the other hand, when the determination-used calculation value P is equal to or smaller than zero upon the execution of the process of the step 425, the CPU determines "No" at the step 425 and then, proceeds with the process to a step 435 to calculate or acquire the feedback requested acceleration GFB in accordance with a following expression (4). Then, the CPU proceeds with the process to a step 270 of FIG. 2 via the step 495.

$$GFB = dD \times KFB1 + dSPD \times KFB2 \quad ...(4)$$

When the CPU proceeds with the process to the step 270 of FIG. 2, the CPU calculates or acquires the requested acceleration Gj of the own vehicle 10 by adding the feedback requested acceleration GFB calculated at the step 265 to the feedforward requested acceleration GFF calculated at the step 260 (Gj = GFF + GFB).

Then, the CPU proceeds with the process to a step 275 to execute processes for activating the engine actuators 32 of the engine or the brake actuator 43 of the braking device such that the requested acceleration Gj calculated at the step 270 is achieved, that is, such that the acceleration (in particular, acceleration/deceleration) of the own vehicle 10 corresponds to the requested acceleration Gj. Thereby, when the requested acceleration Gj is larger than zero, the own vehicle 10 is accelerated. On the other hand, when the requested acceleration Gj is smaller than zero, the own vehicle 10 is decelerated. Then, the CPU proceeds with the process to a step 295 to terminate the execution of this routine once.

It should be noted that when the CACC switch 21 is positioned at the OFF-position upon the execution of the process of the step 202, the CPU determines "No" at the step 202 and then, proceeds with the process directly to the step 295 to terminate the execution of this routine once. In this case, the cooperative following travel control of the own vehicle 10 targeting the communicating preceding vehicle 11 is not executed.

Further, when the identification of the communicating preceding vehicle 11 has not been completed upon the execution of the process of the step 210, the CPU determines "No" at the step 210 and then, proceeds with the process directly to the step 295 to terminate the execution of this routine once.

It should be noted that when the identification of the communicating preceding vehicle 11 has not been completed, however, a vehicle is acquired by the own vehicle sensor 61 and the sensor ECU 60 as the preceding vehicle 11, in other words, the relative traveling speed dSPD, the inter-vehicle distance D, the relative orientation and the like have been acquired upon the execution of the process of the step 210, the CPU may proceed with the process to the step 265 after the CPU sets the feedforward requested acceleration GFF to zero. In this case, the feedback control (i.e., the inter-vehicle distance control) on the basis of the feedback requested acceleration GFB is executed.

The concrete cooperative following travel control executed by the embodiment control apparatus has been described. According to this control, when the driver of the communicating preceding vehicle 11 does not permit the following travel targeting the communicating preceding vehicle 11, the cooperative following travel control of the own vehicle 10 targeting the communicating preceding vehicle 11 is not executed.

In addition, the CPU is programmed or configured to execute a routine shown by the flowchart in FIG. 6 each time a predetermined time elapses to send the CACC non-permission signal of the own vehicle 10 to the outside of the own vehicle 10. Therefore, at a predetermined timing, the CPU starts to execute this routine from a step 600 and then, proceeds with the process to a step 605 to determine whether or not the CACC non-permission switch 22 is set to the ON-position. When the CACC non-permission switch 22 is set to the ON-position, the CPU determines "Yes" at the step 605 and then, sequentially executes processes of steps 610 and 620 described below. Then, the CPU proceeds with the process to a step 695 to terminate the execution of this routine once.

Step 610: The CPU sets the value of the CACC non-permission flag Xcacc to "1".

Step 620 : The CPU sends the CACC non-permission signal (or the CACC stop request signal) Scacc indicating the value (i.e., "1 ") of the CACC non-permission flag Xcacc set at the step 610 to the wireless communication control ECU 80. The wireless communication control ECU 80 sends data (i.e. the own vehicle information or the communication information transmitted through the wireless communication between the vehicles) including the operation state amounts of the own vehicle 10 and the received CACC non-permission signal Scacc to the outside of the own vehicle 10 via the wireless antenna 81.

On the other hand, when the CACC non-permission switch 22 is set to the OFF-position upon the execution of the process of the step 605, the CPU determines "No" at the step 605 and then, sequentially executes processes of steps 615 and 620 described below. Then, the CPU proceeds with the process to the step 695 to terminate the execution of this routine once.

Step 615 : The CPU sets the value of the CACC non-permission flag Xcacc to "0".

Step 620 : The CPU sends the CACC non-permission signal Scacc indicating the value (i.e., "0") of the CACC non-permission flag Xcacc set at the step 615 to the wireless communication control ECU 80. The wireless communication control ECU 80 sends data (i.e. the own vehicle information or the communication information transmitted through the wireless communication between the vehicles) including the operation state amounts of the own vehicle 10 and the received CACC non-permission signal Scacc to the outside of the own vehicle 10 via the wireless antenna 81.

Accordingly, the CACC non-permission signal Scacc of the own vehicle 10 is sent to the outside (the following vehicle) and thus, it is possible to forbid or stop the cooperative following travel control of the following vehicle targeting the own vehicle 10.

The present invention is not limited to the embodiment and various modifications can be employed within a scope of the present invention.

For example, when the estimated acceleration Ges is larger than zero, the control apparatus according to the embodiment may be configured simply to calculate, as the feedforward requested acceleration GFF, a value obtained by multiplying the estimated acceleration Ges by a predetermined positive correction coefficient Kllac (GFF = Ges x Kllac).

Further, when the estimated acceleration Ges is equal to or smaller than zero, the control apparatus according to the embodiment may be configured simply to calculate, as the feedforward requested acceleration GFF, a value obtained by multiplying the estimated acceleration Ges by a predetermined positive correction coefficient Klde (GFF = Ges x Klde).

Further, at the step 270, the total value of the feedback requested acceleration GFB and the feedforward requested acceleration GFF is calculated as the requested acceleration Gj of the own vehicle 10. However, for example, a weighted average of the feedback requested acceleration GFB and the feedforward requested acceleration GFF may be calculated as the requested acceleration Gj of the own vehicle 10. In other words, the requested acceleration Gj of the own vehicle 10 may be calculated in accordance with a following expression (5). In the expression (5), the symbols "α" and "β" are positive constants, respectively. The constants α and β are larger than "0" and smaller than "1" and the constant α may be a value 1- β.

$$Gj = \alpha \times GFF + \beta \times GFB \quad ...(5)$$

Further, the control apparatus according to the embodiment may be configured simply to calculate, as the feedback requested acceleration GFB, a value obtained by multiplying the inter-vehicle distance difference dD by a predetermined correction coefficient KFB (GFB = KFB x dD). The correction coefficient KFB is a constant positive value larger than "0".

In addition, when the control apparatus according to the embodiment acquires the requested acceleration Gs and the actual acceleration Gas of the communicating preceding vehicle 11 through the wireless communication, the control apparatus calculates the feedforward requested acceleration GFF on the basis of the acquired requested acceleration Gs and the acquired actual acceleration Gas. In this regard, the control apparatus may calculate the feedforward requested acceleration GFF only on the basis of the requested acceleration Gs without using the actual acceleration Gas or only on the basis of the actual acceleration Gas without using the requested acceleration Gs.

Further, when the acceleration pedal operation amount Accp and the brake pedal operation amount Brkp in place of the requested acceleration Gs are sent from the communicating preceding vehicle 11, the control apparatus according to the embodiment may be configured to acquire the acceleration pedal operation amount Accp and the brake pedal operation amount Brkp as information on the requested acceleration Gs of the communicating preceding vehicle 11, estimate the requested acceleration Gs of the communicating preceding vehicle 11 on the basis of the acceleration pedal operation amount Accp and the brake pedal operation amount Brkp and calculate the feedforward requested acceleration GFF using the estimated requested acceleration Gs.

Similarly, when the vehicle wheel rotation speeds ωa to ωd or the average vehicle wheel rotation speed ωave in place of the actual acceleration Gas is/are sent from the communicating preceding vehicle 11, the control apparatus according to the embodiment may be configured to acquire the vehicle wheel rotation speeds ωa to ωd or the average vehicle wheel rotation speed ωave as information on the actual acceleration Gas of the communicating preceding vehicle 11, estimate the actual acceleration Gas of the communicating preceding vehicle 11 on the basis of the vehicle wheel rotation speeds ωa to ωd or the average vehicle wheel rotation speed ωave and calculate the feedforward requested acceleration GFF using the estimated actual acceleration Gas.

Further, the control apparatus according to the embodiment is configured to forbid both of the cooperative following travel control of the own vehicle 10 targeting the communicating preceding vehicle 11 and the inter-vehicle distance control of the own vehicle 10 targeting the communicating preceding vehicle 11 when the control apparatus receives the following travel stop request from the communicating preceding vehicle 11. In this regard, the control apparatus may be configured to forbid the cooperative following travel control of the own vehicle 10 targeting the communicating preceding vehicle 11 and permit the inter-vehicle distance control of the own vehicle 10 targeting the communicating preceding vehicle 11 when the control apparatus receives the following travel stop request from the communicating preceding vehicle 11.

The invention relates to a control apparatus of a vehicle for causing an own vehicle to travel following a preceding vehicle. The control apparatus forbids the following travel of the own vehicle targeting the preceding vehicle when preceding vehicle information received through a wireless communication includes a following travel stop request for requesting the stop of the following travel of the own vehicle targeting the communicating preceding vehicle.

**Claims**

**1.** A control apparatus of a vehicle, comprising:

a wireless communication device (80, 81) that is configured to acquire communicating preceding vehicle information including acceleration information on an acceleration (Gs, Gas) of a communicating preceding vehicle (11) traveling in front of an own vehicle (10) from the communicating preceding vehicle (11) through a wireless communication; and

an acceleration control device (20, 30, 40) that is configured to cause the own vehicle (10) to travel following the communicating preceding vehicle (11) by determining a requested acceleration (Gj) of the own vehicle (10) on the basis of the communicating preceding vehicle information and by controlling an acceleration of the own vehicle (10) such that the acceleration of the own vehicle (10) corresponds to the requested acceleration (Gj),

**characterized in that** the acceleration control device (20, 30, 40) is configured to forbid the following travel of the own vehicle (10) targeting the communicating preceding vehicle (11) when the communicating preceding vehicle information includes a following travel stop request for requesting the stop of the following travel of the own vehicle (10) targeting the communicating preceding vehicle (11).

2. A control apparatus according to claim 1, wherein
   the wireless communication device (80, 81) is configured to send own vehicle information including acceleration information on the acceleration of the own vehicle (10) to the outside of the own vehicle (10) through the wireless communication;
   the acceleration control device (20, 30, 40) is configured to control the acceleration of the own vehicle (10); and
   the wireless communication device (80, 81) is further configured to send a following travel stop request for causing an other vehicle to stop an execution of a control for controlling the acceleration of the other vehicle on the basis of the own vehicle information.

3. A control apparatus of a vehicle, comprising:

   a wireless communication device (80, 81) that is configured to send own vehicle information including acceleration information on an acceleration of an own vehicle (10) to the outside of the own vehicle (10) through a wireless communication; and
   an acceleration control device (20, 30, 40) that is configured to control the acceleration of the own vehicle (10),

   **characterized in that** the wireless communication device (80, 81) is configured to send a following travel stop request for causing another vehicle to stop an execution of a control for controlling the acceleration of the other vehicle on the basis of the own vehicle information.

4. A following travel system including vehicles, each vehicle comprising:

   a wireless communication device (80, 81) that is configured to send communication information including acceleration information on an acceleration of an own vehicle (10) to the outside of the own vehicle (10) through a wireless communication and to receive the communication information sent from a communicating preceding vehicle (11) traveling in front of the own vehicle (10) through the wireless communication; and
   an acceleration control device that is configured to determine a requested acceleration (Gj) of the own vehicle (10) on the basis of the communication information (Gs, Gas) sent from the communicating preceding vehicle (11) and to control the acceleration of the own vehicle (10) such that the acceleration of the own vehicle (10) corresponds to the requested acceleration (Gj) to cause the own vehicle (10) to travel following the communicating preceding vehicle (11),

   **characterized in that** the wireless communication device of each of the vehicles is configured to send a following travel stop request for requesting a stop of the following travel of the vehicle traveling behind the own vehicle as one of the communication information, and
   the acceleration control device of each of the vehicles is configured to forbid the following travel targeting the communicating preceding vehicle when the communication information sent form the communicating preceding vehicle includes the following travel stop request.

5. A control method of a vehicle, comprising the steps of:

   acquiring communicating preceding vehicle information including acceleration information on an acceleration (Gs, Gas) of a communicating preceding vehicle (11) traveling in front of an own vehicle (10) from the communicating preceding vehicle (11) through a wireless communication;

causing the own vehicle (10) to travel following the communicating preceding vehicle (11) by determining a requested acceleration (Gj) of the own vehicle (10) on the basis of the communicating preceding vehicle information and by controlling an acceleration of the own vehicle (10) such that the acceleration of the own vehicle (10) corresponds to the requested acceleration (Gj); and

forbidding the following travel of the own vehicle (10) targeting the communicating preceding vehicle (11) when the communicating preceding vehicle information includes a following travel stop request for requesting the stop of the following travel of the own vehicle (10) targeting the communicating preceding vehicle (11).

6. A control method according to claim 5, further comprising the steps of:

sending own vehicle information including acceleration information on the acceleration of the own vehicle (10) to the outside of the own vehicle (10) through the wireless communication;
controlling the acceleration of the own vehicle (10); and
sending a following travel stop request for causing an other vehicle to stop an execution of a control for controlling the acceleration of the other vehicle on the basis of the own vehicle information.

61
60
70
81
80
101
30
40
50
20
42a
42b
42c
42d
21
22
91
93
31
41

| ENGINE ACTUATORS | BRAKE ACTUATOR | STEERING ACTUATOR | OTHER SENSORS |

32
43
53
23

10
11

FIG. 1

FIG. 2

**START** ~200

**IS CACC SWITCH ON ?** ~202 — No (exit right)

↓ Yes

**ACQUISITION OF COMMUNICATING VEHICLE INFORMATION** ~205

**ELIMINATION OF NON-PERMITTED COMMUNICATING VEHICLE** ~210

**IDENTIFICATION OF COMMUNICATING PRECEDING VEHICLE** ~215

**HAS IDENTIFICATION BEEN COMPLETED ?** ~220 — No (exit right)

↓ Yes

$$\text{Ges} \leftarrow \text{fh(Gs)} \cdot \text{kh} + \text{fl(Gas)}$$
$$\text{Ges} \leftarrow \text{Gas}$$ ~230

**ACQUISITION OF INTER-VEHICLE DISTANCE D AND OWN VEHICLE SPEED SPDj** ~235

$$T \leftarrow D/SPDj$$ ~240

**Ges > 0 ?** ~245 — No (branch right)

↓ Yes | (No branch)

| Yes branch | No branch |
|---|---|
| $K1 \leftarrow K1ac$ ~250 | $K1 \leftarrow K1de$ ~255 |
| $K2 \leftarrow MapK2(T)\_ac$ ~252 | $K2 \leftarrow MapK2(T)\_de$ ~257 |
| $K3 \leftarrow MapK3(SPDj)\_ac$ ~254 | $K3 \leftarrow MapK3(SPDj)\_de$ ~259 |

$$GFF \leftarrow Ges \cdot K1 \cdot K2 \cdot K3$$ ~260

**CALCULATION OF FEEDBACK REQUESTED ACCELERATION GFB** ~265

$$Gj \leftarrow GFF + GFB$$ ~270

**ACTIVATION PROCESSES** ~275

**RETURN** ~295

```
┌─────────────────────────────────────┐
│   IDENTIFICATION OF COMMUNICATING    │╮─ 300
│          PRECEDING VEHICLE           │╯
└─────────────────────────────────────┘
┌─────────────────────────────────────┐
│  ACQUISITION OF PRECEDING VEHICLE    │─ 305
│             INFORMATION              │
└─────────────────────────────────────┘
┌─────────────────────────────────────┐
│   IDENTIFICATION OF COMMUNICATING    │─ 310
│          PRECEDING VEHICLE           │
└─────────────────────────────────────┘
┌─────────────────────────────────────┐
│               RETURN                 │─ 395
└─────────────────────────────────────┘
```

# FIG. 3

CALCULATION OF FEEDBACK
REQUESTED ACCELERTION        400

ACQUISITION OF
RELATIVE TRAVELING SPEED dSPD    405

$Dtgt \leftarrow Ttgt \cdot SPDj$    410

$dD \leftarrow D - Dtgt$    415

$P \leftarrow dD \cdot KFB1 + dSPD \cdot KFB2$    420

425

$P > 0$   ?    No

Yes

$GFB \leftarrow (dD \cdot KFB1 + dSPD \cdot KFB2) \cdot KFB3$    430      $GFB \leftarrow (dD \cdot KFB1 + dSPD \cdot KFB2)$    435

RETURN    495

# FIG. 4

FIG. 5(A)

MapK2(T)_ac

SECOND CORRECTION COEFFICIENT K2

0    T1    T2    T3    T4

INTER-VEHICLE TIME T

FIG. 5(B)

MapK2(T)_de

SECOND CORRECTION COEFFICIENT K2

0    T5         T6

INTER-VEHICLE TIME T

FIG. 5(C)

MapK3(SPDj)_ac

THIRD CORRECTION COEFFICIENT K3

0         SPDj3         SPDj4

SPDj1

SPDj2

OWN VEHICLE SPEED SPDj

FIG. 5(D)

MapK3(SPDj)_de

THIRD CORRECTION COEFFICIENT K3

0    SPDj5    SPDj6

OWN VEHICLE SPEED SPDj

21

START ~600

IS CACC NON-PERMISSION SWITCH ON ? 605

Yes | No

Xcacc ← 1 ~610

Xcacc ← 0 ~615

SENDING OF CACC NON-PERMISSION SIGNAL (CACC STOP REQUEST SIGNAL) ~620

RETURN ~695

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015051716 A

- JP 5522193 B